# NEW EUROPEAN PATENT SPECIFICATION

(11) **EP 0 184 708 B2**
(45) Date of publication and mention of the opposition decision: **16.08.1995**
(45) Mention of the grant of the patent: 11.04.1990
(21) Application number: 85114919.5
(22) Date of filing: 25.11.1985
(51) Int. Cl.: F16D 69/02

(54) **Friction material**
Reibwerkstoff
Matériau de friction

(30) Priority: 13.12.1984 JP 263641/84
(43) Date of publication of application: 18.06.1986
(73) Proprietor: SUMITOMO ELECTRIC INDUSTRIES, LTD., Osaka-shi, Osaka 541 (JP)
(72) Inventor: Nakagawa, Mitsuhiko Itami Works, Itami-shi Hyogo-Ken (JP); Nitto, Fumiaki Itami Works, Itami-shi Hyogo-Ken (JP)
(74) Representative: Patentanwälte Kirschner & Grosse

(56) References cited:
- CH-A- 441 890
- DE-A- 2 539 847
- DE-C- 1 198 997
- GB-A- 807 776
- GB-A- 2 022 110
- US-A- 1 797 141
- Bohmhammel: Entwicklung von Reibbelägen für Kupplungen und Bremsen, Zeitschrift GAK,Ausgaben 11 und 12/1973, sowie 1 und 3/1974

## Description

This invention relates to a friction material used for applying braking forces to automobile wheels and the like, and more particularly it relates to an improved friction material designed to prevent creaking noises which are otherwise produced during braking using a disk brake.

### Description of the prior art

Where a disk rotor is braked when it is at low temperatures below 100°C, creaking noises with a low frequency of about 50-500 HZ are often produced immediately before the wheels are stopped or when an automatic car is started or when the brake is released. These creaking noises are produced in organic type friction materials and are noticeable particularly in semimetallic friction materials using steel fiber.

It has been found that reason why much creaking noise is produced in friction materials using steel is that the steel and graphite ingredients in a steel type friction material cause stick slip at very low speeds. It has also been found that such creaking noises tend to be produced even in organic type friction material which do not use steel fiber, if the graphite content is high.

To reduce said creaking noises, therefore, it would be thought effective to reduce the amount of steel fiber or graphite. However, the smaller the amount of steel, the lower the friction coefficient; if the amount of steel is less than 5% by volume, it is no longer possible to maintain the practical function of friction materials. Further, the smaller the amount of graphite, the lower the wear resistance; if the amount of graphite is less than 5% by volume, the amount of wear in friction materials increases to a great extent. In friction materials not using steel fiber, the addition of graphite is an effective means for increasing wear resistance. Therefore, it is not preferable to reduce the amount of graphite or do away with it.

Japanese Patent Application Laid-Open No. 22984/1984 discloses that to prevent the aforesaid creaking noises, steel fiber is united with nickel, zinc, tin, lead or an alloy thereof by melting. This method, however, encounters a problem of high cost.

GB-A-20 22 110 discloses an organic base friction material for use as a friction lining in a brake or clutch comprising a mixture of 20 to 35% of fibers selected from glass, mineral and asbestos fibers, 8 to 15% of a resin, up to 25% metal, 5 to 35% of inorganic modifiers and 15 to 35% of carbon or graphite particles.

### Summary of the invention

Accordingly, an object of the invention is to provide a friction material which reduces creaking noises while containing an amount of graphite required to prevent degradation of wear resistance and is cost-effective.

To achieve this object, a friction material according to the invention comprises the features of Claim 1, and the method according to the invention comprises the features of Claim 2.

The friction material of the invention contains fiber, graphite and a binder as basic ingredients, wherein all or part of said graphite has been physically united in advance by mixing with a binder with one or two or more metals or alloys which are softer than steel.

These aspects and advantages of embodiments of the present invention will become more apparent from the following detailed description when taken in conjunction with the accompanying drawings.

### Brief description of the drawing

Fig. 1 is a schematic sectional view of an example of a friction material according to this invention; and
Fig. 2 is a schematic sectional view of an example of a conventional friction material.

### Description of the preferred embodiments

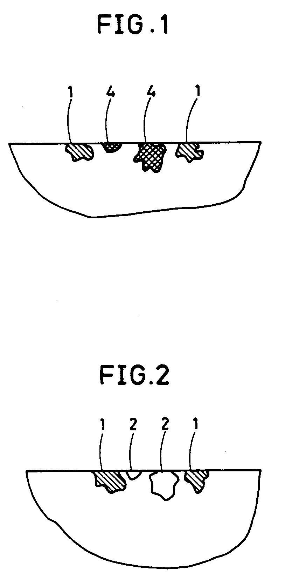

We have found that it is effective in preventing creaking noises to unite physically all or part of the graphite with one or two or more metals or alloys which are softer than steel and after that, to incorporate the union of graphite and metal or alloy in a friction material. Fig. 1 shows an example of a friction material according to this invention, which friction material contains a union 4 of graphite and metal or alloy, and steel fiber 1. On the other hand, a conventional friction material shown in Fig. 2 contains single graphite 2 and steel fiber 1. That is, the essence of the invention is that all or part of the graphite has been physically united in advance with one or two or more metals or alloys, by mixing with a binder.

As for metals or alloys which are softer than steel, lead, tin, zinc and copper are effective and brass and bronze, which are alloys thereof, are effective.

Among binders to be used are rubber, epoxy resin, phenol resin and other organic matter and water glass and other inorganic matter.

Among basic ingredients effective for this invention are inorganic fibers of asbestos, glass, rock wool, glass wool and the like, metal fibers, and organic fibers such as carbon fiber, acrylic fiber treated for flame resistance, and aramid fiber. Further, to ensure satisfactory friction coefficient and wear resistance, preferably, the friciton material contains, on a volume basis, 5-35% steel fiber or steel powder, 10-35% binder, and 0.5-15% metal other than steel, the balance being graphite, and organic and/or inorganic filler.

Functional tests were conducted using friction materials A-E formulated according to Table 1 shown below. In the table, samples A and B are examples of the invention and sample E is a control.

**TABLE 1**

| Formulation (volume percent) | | | |
|---|---|---|---|
| | Example of invention | | Control |
| | A | B | E |
| Steel fiber | 30 | 30 | 30 |
| Phenol resin | 25 | 25 | 25 |
| Barium sulfate | 12 | 12 | 12 |
| Silica | 3 | 3 | 3 |
| Union ⓐ | 30 | | |
| Union ⓑ | | 30 | |
| Graphite | | | 21 |
| Epoxy resin | | | 6 |
| Zinc powder | | | 3 |

### Sample A (example of the invention)

On a volume basis, 5% zinc powder with a grain size of less than 200 mesh, 25% epoxy resin, and 70% graphite with a grain size of less than 200 mesh were mixed, and the mixture was maintained in a hot air furnace in a 200°C atmosphere for 4 hours and cured. Thereafter, it was crushed to provide a union ⓐ. Using this union ⓐ, a mixture of steel fiber, phenol resin, barium sulfate and silica was prepared according to Table 1, and it was press-molded and after-cured to thereby prepare a friction material having a porosity of about 5%.

### Sample B (example of the invention)

On a volume basis, 5% lead-tin alloy powder with a grain size of less than 200 mesh, 25% epoxy resin and 70% graphite with a grain size of less than 200 mesh were mixed, and the mixture was maintained in a hot air furnace in a 200°C atmosphere for 4 hours and cured. It was crushed to provide a union ⓑ. Using this union ⓑ, steel fiber, phenol resin, a mixture of barium sulfate and silica was prepared according to Table 1, and it was press-molded and after-cured to thereby prepare a friction material having a porosity of about 5%.

### Sample E (control)

Steel fiber, phenol resin, barium sulfate, silica, graphite, epoxy resin and zinc powder were mixed according to the formulation shown in Table 1. Under the following condition, it was press-molded and after-cured to thereby prepare a friction material having a porosity of about 5%.

Press condition: Putting the mixture in a mold heated to 150°C and pressing it therein for 10 minutes.

In addition, the mold was a force-cut type mold designed for a constant volume, and the mixture was charged into the mold with sufficient accuracy to ensure that the porosity of the friction material was 5%. The mixture was maintained in a hot air furnace in a 250°C atmosphere for 10 hours and then after-cured.

### Results of functional tests

Functional tests in creaking noises were conducted using said friction material A-E in ordinary automobiles. The magnitude of the creaking noises produced was evaluated as shown in Table 2 below.

**TABLE 2**

| Friction material class | | Rotor temperature (°C) | Deceleration (g) | | | | | |
|---|---|---|---|---|---|---|---|---|
| | | | 0.05 | 0.10 | 0.15 | 0.20 | 0.25 | 0.30 |
| Example of the invention | A | 30 | 2 | 2 | 0 | 1 | 1 | 0 |
| | | 50 | 2 | 1 | 1 | 0 | 0 | 0 |
| | | 70 | 1 | 0 | 0 | 0 | 0 | 0 |
| | | 100 | 0 | 0 | 0 | 0 | 0 | 0 |
| | B | 30 | 2 | 2 | 2 | 1 | 1 | 0 |
| | | 50 | 2 | 1 | 2 | 1 | 1 | 0 |
| | | 70 | 0 | 0 | 1 | 0 | 0 | 1 |
| | | 100 | 0 | 0 | 1 | 0 | 0 | 0 |
| Control | E | 30 | 3 | 2 | 2 | 2 | 1 | 0 |
| | | 50 | 3 | 3 | 3 | 3 | 2 | 1 |
| | | 70 | 2 | 2 | 2 | 0 | 2 | 2 |
| | | 100 | 2 | 2 | 1 | 0 | 0 | 0 |

The initial velocity of the automobile was 20 Km/hr., and the rotor temperature Ti (°C) was changed in 4 steps as shown in Table 2. Further, the deceleration β (g) was changed in 6 steps for each temperature step, as shown in Table 2. Thus, brake tests were conducted once for each, and the magnitude of the creaking sound was evaluated. Creaking noises were evaluated by conducting a functional test in which the driver evaluated it with his ears, rating the noises at 3, 2 or 1 in the decreasing order of magnitude, using 0 to indicate the absence of creaking noises.

It can be seen from Table 2 that the friction materials according to the invention are effective in preventing creaking noises. Further, fade tests were conducted for the friction materials using a dynamometer.

When the initial velocity of the automobile was 100 Km/hr. and the deceleration was 0.45 g, the brake was applied 10 times at intervals of 35 seconds to determine the friction coefficient (»). Each friction material showed its minimum value at the 6th braking, the respective values being as follows.

| | |
|---|---|
| Sample A (example of the invention) | 0.23 |
| Sample B (example of the invention) | 0.24 |
| Sample E (control) | 0.19 |

As described above, friction materials according to the invention are effective in preventing creaking noises and are superior in fade resistance.

## Claims

1. A friction material, comprising in percent by volume 10 to 35% of a matrix forming binder material, a separate combination of graphite powder and 0.5 to 15% of the friction material of a metal or metal alloy softer than steel, said combination being prepared prior to any embedding in said matrix forming binder material, by separately mixing the graphite powder, said metal or metal alloy softer than steel and a binder to form an intermediate product, solidifying and then crushing said intermediate product to form said combination which is then embedded in said matrix material, and 5 to 35% of a friction causing component selected from the group consisting of steel fibers, steel powder, asbestos fibers, glass fibers, rock wool, glass wool, carbon fibers, acrylic fibers and aramid fibers also embedded in said matrix forming binder material, the remainder being said graphite and a filler.

2. A method of manufacturing the friction material according to claim 1, comprising the following steps:
(a) separately preparing in the manner defined in Claim 1 the combination of graphite and one or more metal or metal alloy which is softer than steel in such a way that the graphite and metal alloy enter into an intimate bond with each other,
(b) providing friction causing fibers and the matrix forming binder material,
(c) embedding said combination of already intimately bonded graphite and metal or metal alloy and said friction causing fibers in said binder matrix material, and
(d) molding and curing said binder matrix material for forming said friction material.

3. The method as claimed in claim 2, wherein said metal or metal alloy softer than steel is selected from a group consisting of lead, lead alloys, zinc, zinc alloys, tin and tin alloys.

4. The method as claimed in claims 2 or 3, wherein said friction causing fibers are selected from the group consisting of asbestos fibers, glass fibers, rock wool fibers, slug wool fibers, steel fibers, carbon fibers, acrylic fibers treated for flame resistance, and aramid fibers.

## Patentansprüche

1. Reibwerkstoff, enthaltend 10 bis 35 Vol.-% eines matrixbildenden Bindermaterials, eine gesonderte Kombination von Graphitstaub und 0,5 bis 15 %, bezogen auf das Reibmaterial, eines Metalls oder einer Metallegierung, weicher als Stahl, wobei diese Kombination vor jeglicher Einbettung in dem die Matrix bildenden Bindermaterial dadurch hergestellt wird, daß der Graphitstaub, das Metall oder die Metallegierung weicher als Stahl und ein Bindemittel zur Bildung eines Zwischenprodukts gemischt werden, das Zwischenprodukt unter Bildung der Kombination verfestigt und dann zerkleinert wird, welche dann in das Matrixmaterial eingebettet wird, und 5 bis 35 % eines Reibung verursachenden Bestandteils, ausgewählt aus der Gruppe bestehend aus Stahlfasern, Stahlmehl, Asbestfasern, Glasfasern, Steinwolle, Glaswolle, Kohlenstoffasern, Acrylfasern und Armaidfasern, die auch in dem matrixbildenden Bindermaterial eingebettet sind, wobei der Rest das Graphit und ein Füllmaterial sind.

2. Verfahren zur Herstellung des Reibmaterials nach Anspruch 1, welches die folgenden Schritte umfaßt:
(a) die gesonderte Herstellung auf die in Anspruch 1 definierte Weise der Kombination aus Graphit und einem oder mehreren Metallen oder Metallegierungen, weicher als Stahl, auf eine Weise, daß der Graphit und die Metallegierung miteinander eine enge Bindung eingehen,
(b) Bereitstellen der Reibung verursachenden Fasern und des matrixbildenden Bindermaterials,
(c) Einbetten der Kombination von bereits eng verbundenem Graphit und Metall oder Metallegierung und der Reibung verursachenden Fasern in das Bindermatrixmaterial, und
(d) Formen und Aushärten des Bindermatrixmaterials zur Bildung des Reibwerkstoffs.

3. Verfahren nach Anspruch 2, wobei das Metall oder die Metallegierung, weicher als Stahl, aus einer Gruppe ausgewählt wird, die Blei, Bleilegierungen, Zink, Zinklegierungen, Zinn und Zinnlegierungen umfaßt.

4. Verfahren nach Anspruch 2 oder 3, wobei die Reibung hervorrufenden Fasern aus der Asbestfasern, Glasfasern, Schlackenwollefasern, Stahlfasern, Kunststoffasern, flammwiderstandbehandelten Acrylfasern und Aramidfasern umfassenden Gruppe ausgewählt werden.

## Revendications

1. Matériau de friction comprenant en volume 10 à 35 % d'un matériau liant formant matrice, une combinaison séparée de poudre de graphite et 0,5 à 15 % du matériau de friction d'un métal ou alliage métallique plus tendre que l'acier, cette combinaison étant préparée avant toute opération d'enrobage dans le matériau liant formant matrice, en mélangeant séparément la poudre de graphite avec le métal ou l'alliage métallique plus tendre que l'acier et un liant pour former un produit intermédiaire, en solidifiant et ensuite en broyant ce produit intermédiaire pour former cette combinaison qui est alors enrobée dans le matériau de la matrice, et 5 à 35 % d'un composant provoquant la friction, choisi à partir du groupe constitué par des fibres d'acier, de la poudre d'acier, des fibres d'amiante, des fibres de verre, de la laine de roche, de la laine de verre, des fibres de carbone, des fibres acryliques et des fibres d'aramide également enrobées dans ce matériau liant formant matrice, le reste étant constitué par le graphite et une matière de charge.

2. Procédé pour la fabrication du matériau de friction selon la revendication 1, comprenant les étapes suivantes consistant à :
(a) préparer séparément de la manière définie dans la revendication 1 de la combinaison de graphite et d'un métal ou de plus d'un métal ou d'un alliage métallique qui est plus tendre que l'acier,
(b) fournir des fibres provoquant la friction et la matrice formant liant,
(c) enrober la combinaison du graphite et du métal ou de l'alliage métallique et des fibres provoquant la friction déjà intimement liés dans ce matériau de matrice de liant, et
(d) mouler et durcir ce matériau de matrice de liant pour former le matériau de friction.

3. Procédé selon la revendication 2, dans lequel le métal ou l'alliage métallique plus tendre que l'acier est choisi à partir du groupe constitué par le plomb, les alliages de plomb, le zinc, des alliages de zinc, l'étain ou des alliages d'étain.

4. Procédé selon la revendication 2 ou 3, dans lequel les fibres provoquant la friction sont choisies parmi le groupe constitué par des fibres d'amiante, des fibres de verre, des fibres de laine de roche, des fibres de laine de perles de verre, des fibres d'acier, des fibres de carbone, des fibres acryliques traitées pour la résistance à la flamme et des fibres d'aramide.
